**Europäisches Patentamt**

**European Patent Office**

**Office européen des brevets**

(11) Veröffentlichungsnummer: **0 237 927**
**A1**

## (12) EUROPÄISCHE PATENTANMELDUNG

(21) Anmeldenummer: **87103456.7**

(22) Anmeldetag: **10.03.87**

(51) Int. Cl.³: **A 01 C 17/00**

(30) Priorität: **18.03.86 DE 3608935**

(43) Veröffentlichungstag der Anmeldung:
**23.09.87 Patentblatt 87/39**

(84) Benannte Vertragsstaaten:
**AT BE CH DE ES FR GB IT LI LU NL SE**

(71) Anmelder: **Amazonen-Werke H. Dreyer GmbH & Co. KG**
**Am Amazonenwerk 9-13**
**D-4507 Hasbergen-Gaste(DE)**

(72) Erfinder: **Dreyer, Heinz, Dipl.-Ing.Univ.Dr. agr.**
**Am Amazonenwerk 7**
**D-4507 Hasbergen(DE)**

(54) Schleuderstreuer.

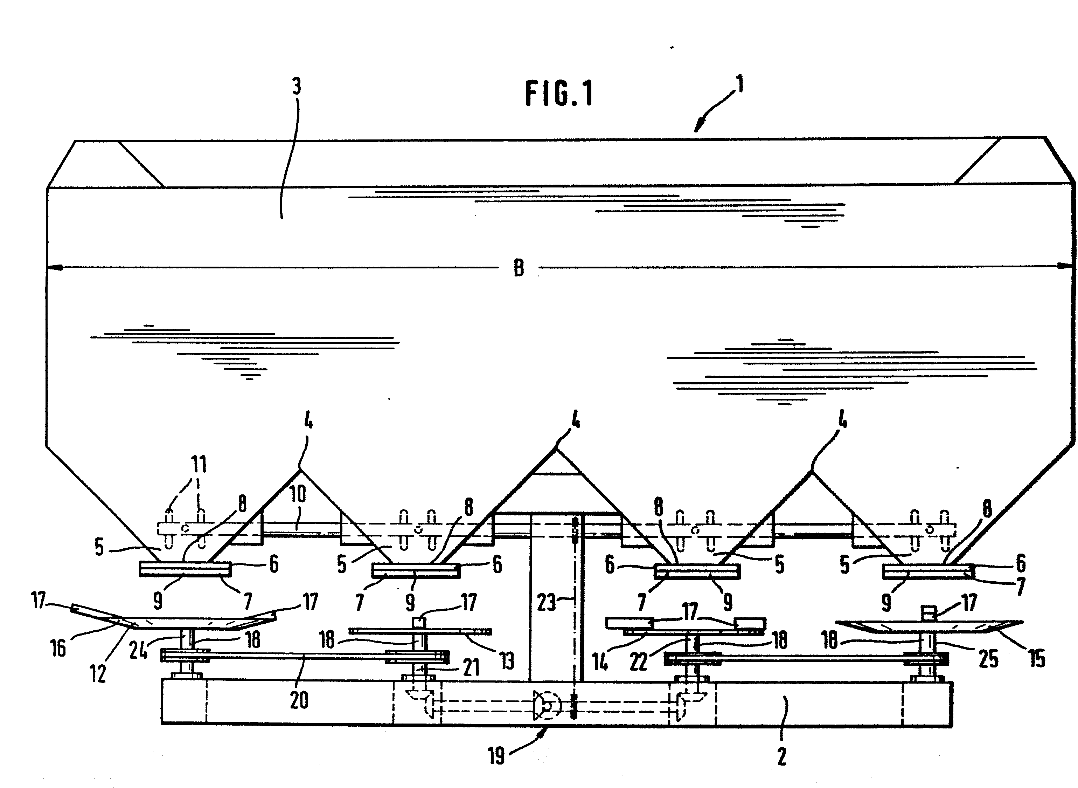

(57) Schleuderstreuer, der einen Rahmen, sowie einen mit einstell- und verschließbaren Dosieröffnungen vorgesehenen Vorratsbehälter aufweist, und bei dem sich die Wurfelemente unterhalb des Vorratsbehälters und innerhalb des vom Vorratsbehälter seitlich begrenzten Bereiches befinden, wobei zumindest drei, vorzugsweise vier Wurfelemente unterhalb des Vorratsbehälter innerhalb des vom Vorratsbehälters seitlich begrenzten Bereiches angeordnet sind, sowie jeweils einem Wurfelement zugeordneten Dosieröffnungen die unabhängig von den den anderen Wurfelementen zugeordneten Dosieröffnungen verschließbar sind und zwar derart, daß während des Betriebes (Ausbringen von Düngemitteln auf dem Feld) die Streubreite durch Zu- bzw. Abschalten von Streufächern in zumindest drei, vorzugsweise vier Stufen vergrößer- bzw. verkleinerbar ist. Um Der Erfindung liegt daher die Aufgabe zugrunde, ein sehr große Gleichmäßigkeit der Streustärke innerhalb jedes Streufächers sowie eine äußerst große Gleichmäßigkeit der Streustärke über die gesamte Arbeitsbreite des Schleuderstreuers in äußerst einfacher Weise zu erreichen, ist vorgesehene, daß auf den Wurfelementen (12,13,14,15), die als Schleuderscheiben (16) ausgebildet sind, jeweils zumindest zwei Wurfschaufeln (17) angeordnet sind und zwar derart, daß jede Wurfschaufel (17) der Schleuderscheiben (16) die Düngemittelpartikeln mit einer anderen Umfangsgeschwindigkeit abschleudern (Figure 1).

./...

FIG.1

Amazonen-Werke

H. Dreyer GmbH & Co. KG

Am Amazonenwerk 9 - 13

4507 Hasbergen-Gaste

ANR 1 000 667


Schleuderstreuer


Die Erfindung betrifft einen Schleuderstreuer gemäß des Oberbegriffes des Anspruches 1.


Ein derartiger Schleuderstreuer ist bereits durch die DE-OS 33 37 762 bekannt. Dieser Schleuderstreuer zeichnet sich durch zumindest drei aneinander anschließende und sich überlappende einzelne Streufächer aus, die zu einem Streubild zusammengesetzt werden, wobei entscheidend ist, daß jeder Streufächer jeweils von einem Wurfelement erzeugt wird. Hierdurch kann das Streubild aus den einzelnen Streufächern derart zu einem Ganzen zusammengesetzt werden, wie es die jeweiligen Einsatzverhältnisse und Bedingungen erfordern. Die einzelnen Streufächer werden also von besonderen Wurfelementen unabhängig voneinander erzeugt, wobei in den Streusektor bzw. Streustreifen eines jeden Streufächers nur im Bereich der Überlappungszonen Düngemittelpartikel von mehreren Wurfelementen geworfen werden. Hierdurch ergibt sich der entscheidende Vorteil, daß sich die effektive Streubreite unter Beibehaltung der gleichmäßigen Streustärke vergrößern oder reduzieren läßt. So ist es beispielsweise in einfachster Weise möglich, sich der zu bestreuenden Fläche eines keilförmig zulaufenden Reststückes einer Wiese oder eines Ackers anzupassen, ohne daß dies zu einer Veränderung der Streustärke führt. Der Einsatz unterschiedlicher Wurfelemente ermöglicht weiterhin ein Anpassen der erforderlichen effektiven Streubreite an verschiedene Fahrgassensysteme.

Die Aufteilung des von den Wurfelementen eines Schleuderstreuers erzeugten Streubildes in einzelne, sich überlappende Streufächer bringt also insbesondere bei sehr großen Arbeitsbreiten von 18, 24 m und mehr entscheidende Vorteile für die Landwirtschaft. Die Handhabung eines solchen Schleuderstreuers wird wesentlich vereinfacht, da auf einfachste Weise ein Verkleinern oder Vergrößern der effektiven Streubreite herbeigeführt werden kann, so daß eine sehr gute Anpassung an verschiedene Einsatzbedingungen möglich ist.

Um jeweils einzelne, in gewünschter Weise gelegene Streufächer entstehen zu lassen und um ein gegenseitiges Ablenken der von den verschiedenen Wurfelementen abgeschleuderten Düngemittelpartikel zu verhindern, sind die zur Horizontalen gemessenen Abwurfwinkel der von den äußeren Wurfelementen abgeschleuderten Düngemittelpartikel größer als die der von den inneren Wurfelementen abgeschleuderten Düngemittelpartikel. Hierdurch wird eine gewisse Gleichmäßigkeit der Streustärke über die gesamte Arbeitsbreite des Schleuderstreuers erreicht. Durch die Anordnung gleich langer Wurfschaufeln auf den jeweiligen Wurfelementen, was zum Abschleudern der Düngemittelpartikel bei manchen Düngersorten mit gleicher Umfangsgeschwindigkeit führt, werden die Düngemittelpartikel jedoch vermehrt in den äußeren Bereich des von dem jeweiligen Wurfelementen mit Dünger beaufschlagten Streufächers getragen, so daß bei manchen Düngersorten keine homogene Streustärke innerhalb eines jeden Streufächers entsteht. In Anbetracht dieser Tatsache ist es natürlich nicht immer möglich, eine große Gleichmäßigkeit der Streustärke über die gesamte effektive Streubreite des Düngerstreuers zu erhalten.

Der Erfindung liegt daher die Aufgabe zugrunde, ein sehr große Gleichmäßigkeit der Streustärke innerhalb jedes Streufächers sowie eine äußerst große Gleichmäßigkeit der Streustärke über die gesamte Arbeitsbreite des Schleuderstreuers in äußerst einfacher Weise zu erreichen.

Diese Aufgabe wird erfindungsgemäß durch den kennzeichnenden Teil des Anspruch 1 gelöst. Infolge dieser Maßnahmen läßt sich eine homogene Streustärke innerhalb eines jeden Streufächers erzeugen. Dadurch, daß jede Wurfschaufel der als Schleuderscheiben ausgebildeten Wurfelemente die Düngemittelpartikel mit einer anderen Umfangsgeschwindigkeit abschleudert, versorgt beispielsweise eine der beispielsweise mit zwei Wurfschaufeln bestückten Schleuderscheiben den inneren Bereich und die andere Wurfschaufel den äußeren Bereich eines Streusektors des jeweiligen Wurfelementes. Hierdurch entsteht eine sehr große Gleichmäßigkeit der Streustärke innerhalb eines jeden Streufächers, so daß diese einzelnen Streufächer, die sich jeweils in ihren sich aneinander anschließenden äußeren Bereichen überlappen, zu einem gesamten Streubild mit äußerst großer Gleichmäßigkeit der Streustärke über die gesamte Arbeitsbreite des Schleuderstreuers in äußerst einfacher Weise zusammenfügen lassen. Somit ist ein Reduzieren und Vergrößern der effektiven Streubreite unter Beibehaltung der gewünschten Streustärke jederzeit möglich.

Durch das Abschleudern der Düngemittelpartikel mit unterschiedlichen Umfangsgeschwindigkeiten von den jeweiligen Wurfelementen wird die Gleichmäßigkeit der Streustärke innerhalb eines jeden Streufächers und somit des gesamten Streubildes entscheidend verbessert. Hierbei ist in einer erfindungsgemäßen Ausführungsform vorgesehen, die auf den Schleuderscheiben angeordneten Wurfschaufeln unterschiedlich lang auszubilden, so daß die äußeren Teile der auf den Schleuderscheiben angeordneten Wurfschaufeln jeweils einen unterschiedlichen Abstand zur Drehachse der Schleuderscheibe aufweisen. Hierdurch werden die von den Wurfschaufeln der jeweiligen Schleuderscheibe erfaßten Düngemittelpartikel mit unterschiedlichen Umfangsgeschwindigkeiten von dieser Schleuderscheibe abgeschleudert. Diese unterschiedlichen Umfangsgeschwindigkeiten verleihen den Düngemittelpartikeln unterschiedliche Impulse, so daß die Düngemittelparitkel unterschiedliche Wurfbahnen beschreiben. Hierbei beschreiben die mit geringerer Umfangsgeschwindigkeit abgeschleuderten Düngemittelpartikel eine kürzere Wurfbahn als die mit größerer Umfangsgeschwindigkeit abgeschleuderten Düngemittelpartikel. Dies bewirkt, daß die mit geringerer Umfangsgeschwindikeit abgeschleuderten Partikel nicht so weit nach außen geschleudert werden und somit den inneren Bereich des von einem Wurfelement erzeugten Streufächers mit Streumaterial versorgen, wobei die mit größerer Umfangsgeschwindigkeit abgeschleuderten Partikel weiter nach außen getragen werden, und den äußeren Bereich des selben Streufächers mit Material beaufschlagen, so daß jedes Wurfelement einen eine sehr große Gleichmäßigkeit der Streustärke aufweisenden Streufächer erzeugt. Das Zusammenfügen dieser einzelnen, jedem Wurfelement zugeordneten Streufächer ergibt das sich über die gesamte Arbeitsbreite des Schleuderstreuers erstreckende, eine sehr große Gleichmäßigkeit in der Streustärke aufweisende Streubild.

Diese große Gleichmäßigkeit der Streustärke innerhalb eines jeden Streufächers und somit des gesamten, sich über die Arbeitsbreite des Düngerstreuers erstreckenden Streubildes läßt sich auch durch eine andere erfindungsgemäße Ausführungsform erreichen, indem die einzelnen Wurfschaufeln einer jeden Schleuderscheibe

5

zumindest in ihren äußeren Bereichen mit unterschiedlichen Winkeln zur Radialen der jeweiligen Schleuderscheibe angestellt werden.

In einer weiteren, besonders vorteilhaften Ausführungsform ist erfindungsgemäß vorgesehen, daß diese die Düngemittelpartikel mit unterschiedlichen Umfangsgeschwindigkeiten abschleudernden Wurfschaufeln auf den jeweils einander benachbarten Schleuderscheiben winkelversetzt zueinander angeordnet sind. Infolge dieser Maßnahme wird verhindert, daß die Wurfbahnen der von den verschiedenen Wurfelementen abgeschleuderten Düngemittelpartikel direkt aufeinander treffen und die Düngemittelpartikel so direkt aneindander prallen, wobei sie sich gegenseitig ablenken, so daß sich jeweils einzelne, in gewünschter Weise aufzubauende Streufächer nicht erzeugen lassen. Hierdurch ist es nicht unbedingt erforderlich, daß die Wurfschaufeln unterschiedliche Abwurfwinkel zur Horizontalen aufweisen.

Die erfindungsgemäßen Ausführungsformen zum Abschleudern der Düngemittelpartikel mit unterschiedlichen Umfangsgeschwindigkeiten von den Wurfelementen beschränkt sich natürlich nicht nur auf die genannten Ausführungsbeispiele. Mit in die Erfindung eingeschlossen werden sollen sämtliche, zum Abschleudern der Düngemittelpartikel mit unterschiedlichen Umfangsgeschwindigkeiten geeignete Ausführungsformen, wie beispielsweise auch beispielsweise mit unterschiedlichen Radien versehene gekrümmte Wurfschaufeln.

Weitere Einzelheiten der Erfindung sind der Beispielsbeschreibung und den Zeichnungen zu entnehmen. Hierbei zeigen

Fig. 1 einen erfindungsgemäß ausgerüsteten Schleuderstreuer in der Ansicht von hinten,

Fig. 2 eine Prinzipdarstellung des in erfindungsgemäßer Weise mit unterschiedlich langen Wurfschaufeln ausgerüsteten Schleuderstreuers und das von diesem Schleuderstreuer erzeugte Streubild und

Fig. 3 eine weitere Prinzipdarstellung des in erfindungsgemäßer Weise ausgerüsteten Schleuderstreuers, bei dem die Wurfschaufeln mit unterschiedlichen Winkeln zur Radialen der Schleuderscheibe angestellt sind und daß von diesem Schleuderstreuer erzeugte Streubild.

Der Schleuderstreuer 1 ist als Zentrifugaldüngerstreuer ausgebildet und weist den Rahmen 2 sowie den Vorratsbehälter 3 auf. Dieser Schleuderstreuer 1 ist mit bekannten und daher nicht näher dargestellen Dreipunktkupplungselementen ausgestattet und läßt sich so in bekannter Weise mit dem Dreipunktkraftheber eines Schleppers verbinden. Der untere Bereich des Vorratsbehälters 3 ist durch drei dachförmige Teile 4 in vier Behälterspitzen 5 aufgeteilt. Jede Behälterspitze 5 weist eine ebene Grundplatte 6 auf, an die die abnehmbare Bodenplatte 7, in welcher sich die Auslauföffnungen 8 befindet, befestigt ist. Unterhalb der leicht lösbaren Bodenplatte 7 befindet sich jeweils ein als Schieber ausgebildetes Verstellelement 9, mit dem die Öffnungsweite der jeweiligen Auslauföffnung 8 einzustellen oder zu verschließen ist. Die Verstellelemente 9 sind sowohl unabhängig voneinander als auch zusammen über eine Fernbedienung vom Schlepper aus zu betätigen. In den unteren Bereich der Behälterspitzen 5 erstreckt sich die horizontal verlaufende, antreibbare Rührwelle 10, die in den Wandungen der Behälterspitzen 5 gelagert und abgedichtet ist. Die Rührwelle 10 ragt in sämtliche Behälterspitzen 5 hinein und weist im Inneren des Vorratsbehälters 2, im Bereich der Behälterspitzen 5,

die Rührstifte 11 auf.

Unterhalb der Auslauföffnungen 8 der Behälterspitzen 5 sind jeweils die Wurfelemente 12, 13, 14 und 15 quer zur Fahrtrichtung des Schleuderstreuers gesehen nebeneinander angeordnet, wobei jeder Behälterspitze 5 ein Wurfelement 12, 13, 14 und 15 zugeordnet ist. Diese Wurfelemente 12, 13, 14 und 15 sind als Schleuderscheiben 16 ausgebildet und jeweils mit zwei Wurfschaufeln 17 bestückt. Die Schleuderscheiben 16 werden jeweils um die aufrechte Achse 18 rotierend von einer Zapfwelle eines den Düngerstreuer tragenden Schleppers angetrieben. Hierbei werden die beiden inneren, etwas tiefer angeordneten Wurfelemente 13 und 14, die in dem gleichen Abstand zur Maschinenmitte angeordnet sind, über das Zahnradgetriebe 19 von der Schlepperzapfwelle angetrieben, so daß die Wurfelemente 13, 14 um ihre aufrechte Achse rotieren. Die äußeren, in bezug auf die inneren Wurfelemente 13, 14 etwas höher angeordneten Wurfelemente 12 und 15 werden über die Keilriementriebe 20 von den Wellen 21, 22 der inneren Wurfelemente 13, 14 angetrieben und in Rotation versetzt. Weiterhin wird von dem Zahnradgetriebe 19 über den Kettentrieb 23 die Rührwelle 10 angetrieben. Die als Schleuderscheiben 16 ausgebildeten Wurfelemente 12, 13, 14, 15 sind leicht lösbar auf den Wellen 21, 22, 24 und 25 angeordnet, so daß sie auf einfache Weise bei Bedarf gegen andere bzw. anders ausgebildete Schleuderscheiben auszutauschen sind.

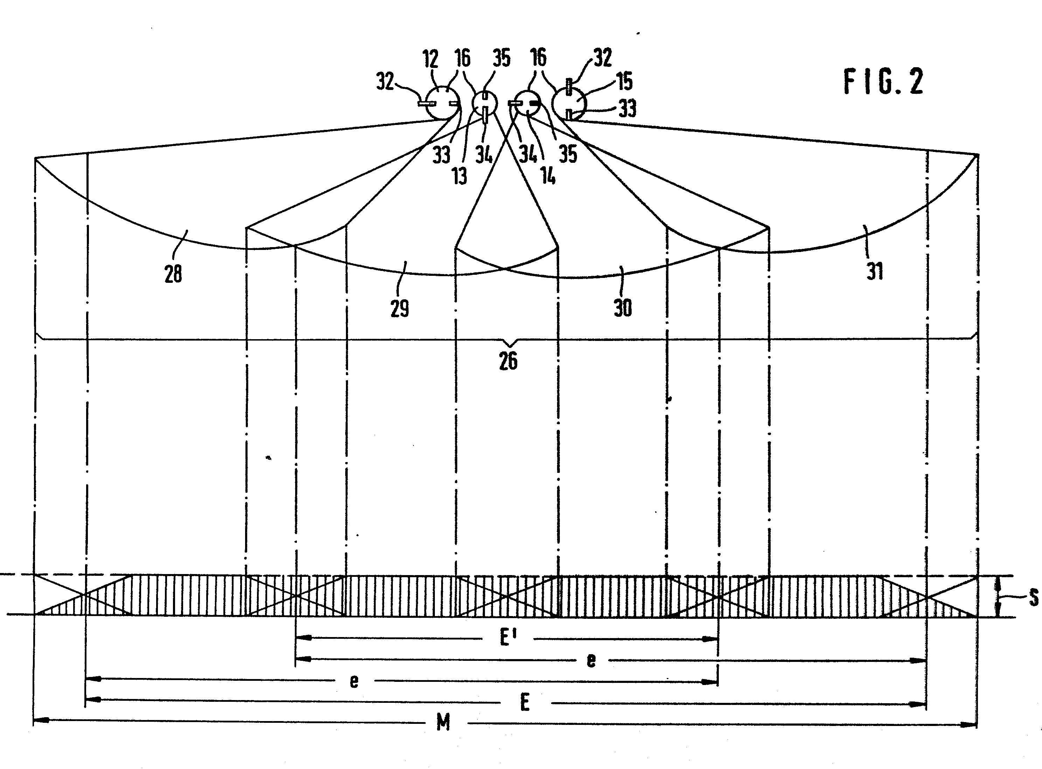

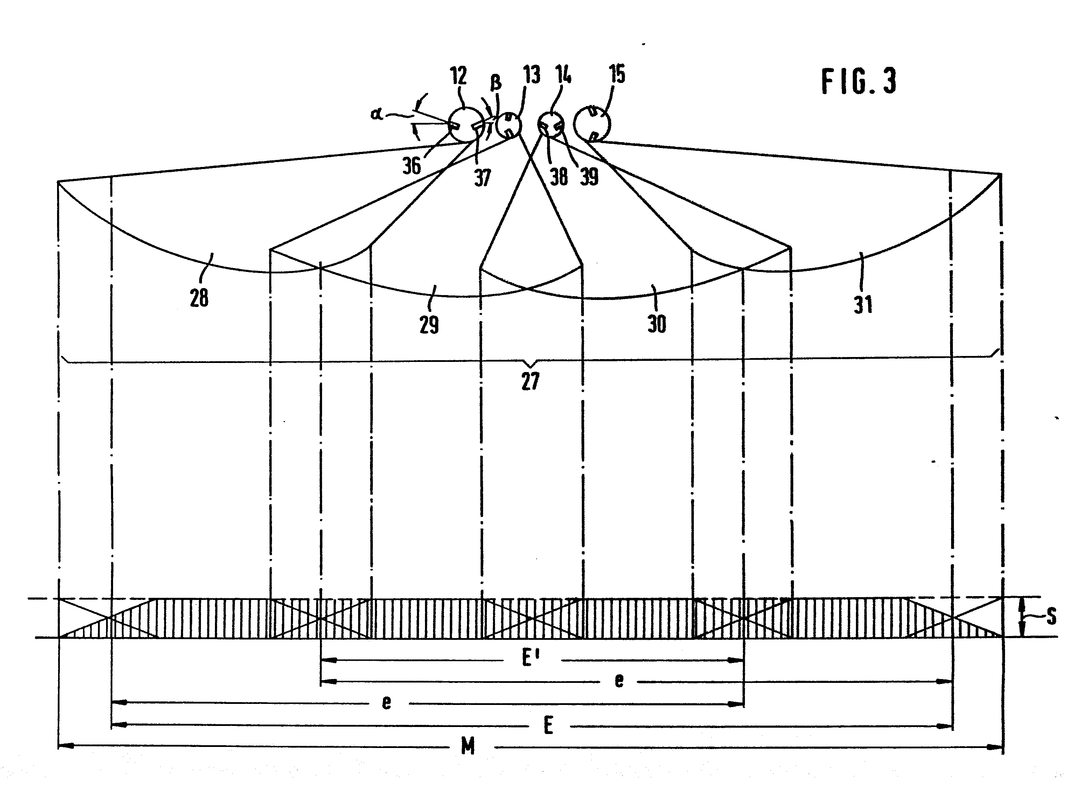

Den rotierend angetriebenen Wurfelementen 12, 13, 14 und 15 werden mit Hilfe der Verstellelemente 9 die auszubringenden Düngemittelpartikel in einstellbaren Mengen zugeführt. Diese Düngemittelpartikel werden von den auf den rotierenden Schleuderscheiben 16 angeordneten Wurfschaufeln 17 abgeschleudert und gemäß dem in den Fig. 2 und 3 dargestellten Streubild gleichmäßig auf der Bodenoberfläche verteilt.

Neben dem Anordnen der Schleuderscheiben 16 in unterschiedlichen Höhen soll ein gegenseitiges Behindern der von den Wurfschaufeln der jeweiligen Streuscheiben 16 abgeschleuderten Düngemittelpartikel dadurch verhindert werden, daß die Wurfschaufeln 17 auf den jeweils einander benachbarten Schleuderscheiben 16 winkelversetzt zueinander angeordnet sind. Hierdurch wird erreicht, daß sich die einzelnen Düngemittelpartikel nicht gegenseitig auf ihren Wurfbahnen behindern.

Der Vorratsbehälter 3 mit seinen unterhalb seines Behälters 3 innerhalb des vom Behälters 3 seitlich begrenzten Bereiches angeordneten Wurfelemente 12, 13, 14 und 15 weist eine Breite B auf, die sowohl in der Betriebs- als auch in der Transportstellung kleiner oder gleich 3 m ist. Hierdurch kann die Maschine ohne Umbau auf öffentlichen Straßen und Wegen transportiert werden.

Die von den einzelnen Schleuderscheiben 16 abgeschleuderten Düngemittelpartikel werden auf der Bodenoberfläche gemäß der in den Fig. 2 und 3 dargestellten Streubildern 26, 27 gleichmäßig verteilt. Die in den Fig. 2 und 3 dargestellten Streubilder 26, 27 sollen im folgenden näher erläutert werden:

Die Streubilder 26 und 27 gemäß der Fig. 2 und 3 stellen in der oberen Hälfte die von den einzelnen Wurfelementen 12,13,14 und 15 erzeugten einzelnen Streufächer 28, 29, 30 und 31, die zusammengesetzt das jeweilige Streubild 26 oder27 ergeben, in der Draufsicht dar. In der unteren Hälfte der Darstellung ist in Prinzipdarstellung die aus den einzelnen Streufächern bzw. aus dem Streubild resultierende gleichmäßige Streustärke S dargestellt.

Am oberen Rand der Darstellung in Fig. 2 sind die vier als Schleuderscheiben 16 ausgebildeten Wurfelemente 12, 13, 14 und 15 schematisch abgebildet. Diese Wurfelemente 12, 13, 14 und 15 sind mit jeweils zwei unterschiedlich langen Wurfschaufeln 32, 33, und 34, 35 bestückt, wodurch die einem Wurfelement zugeführten Düngemittelpartikel von jeder Wurfschaufel 32, 33, 34 und 35 mit einer anderen Umfangsgeschwindigkeit abgeschleudert werden. Hierdurch wird erreicht, daß die von einem Wurfelement abgeschleuderten Düngemittelpartikel auf unterschiedlich langen Wurfbahnen dem Boden zugeführt werden. Die Wurfbahnen der kürzeren Wurfschaufeln 33 und 35 der jeweiligen Wurfelemente 12, 13, 14 und 15 sind kürzer als die der langen Wurfschaufeln 32 und 34, so daß die kurzen Wurfschaufeln 33 und 35 den jeweiligen inneren Bereich eines Streufächers 28, 29, 30 und 31 mit Dünger versorgen und die längeren Wurfschaufeln 32 und 34 den Dünger weiter nach außen tragen und so den äußeren Bereich eines Streufächers mit Dünger beaufschlagen. Durch das Abschleudern der Düngemittelpartikel mit unterschiedlichen Umfangsgeschwindigkeiten durch die Wurfschaufeln 32, 33, 34 und 35 von den Wurfelementen 12, 13, 14 und 15 wird erreicht, daß die Gleichmäßigkeit der Streustärke S innerhalb eines jeden Streufächers 28, 29, 30 und 31 über den gesamten, von einer Schleuderscheibe 16 zu bestreuenden Bereich sehr groß ist. Der Dünger wird also innerhalb eines jeden Streufächers 28, 29, 30 und 31 sehr gleichmäßig verteilt, so daß auch ein Zusammenfügen der sich überlappenden einzelnen Streufächer zu dem gesamten Streubild 26 mit sehr großer gleichmäßiger Streustärke S führt. Dadurch, daß sowohl die einzelnen Streufächer 28, 29, 30 und 31 als auch das gesamte Streubild 26 eine sehr große gleichmäßige Streustärke S über den gesamten Arbeitsbereich des Düngerstreuers aufweisen, läßt sich die Arbeitsbreite des Düngerstreuers unter Beibehaltung dieser gleichmäßigen Streustärke S beliebig verkleinern oder vergrößern, indem die Materialzufuhr zu den einzelnen Wurfelementen 12, 13, 14 und 15 jeweils getrennt voneinander unterbrochen oder wieder hergestellt werden wieder hergestellt werden kann.

Die vier Wurfelemente 12, 13, 14 und 15 erzeugen also jeweils die einzelnen Streufächer 28, 29, 30 und 31, wobei diese vier aneinander anschließenden und sich überlappenden Streufächer zusammengesetzt das Streubild 26 ergeben. Die von den vier Wurfelementen abgeschleuderten Düngemittelpartikel erreichen eine effektive Streubreite E, während die maximale Streubreite M des Streubildes 26 um die Größe der Überlappung größer als die effektive Streubreite E ist. Die beiden inneren Schleuderscheiben 13 und 14 schleudern die Düngemittelpartikel jeweils über einen Bereich ab, der sich aus den zusammengesetzten Streufächern 29 und 30 ergibt. Die effektive Streubreite dieser beiden Wurfelemente 13 und 14 wird mit E' bezeichnet. In dem in Fig. 2 dargestellten Ausführungsbeispiel beträgt die jeweilige effektive Streubreite E beispielsweise 24 m und die effektive Streubreite E' 16 m, wobei die Streustärke S innerhalb der einzelnen Streufächer 28, 29, 30 und 31 jeweils gleich groß ist und eine sehr große Gleichmäßigkeit über den gesamten Streubereich aufweist. Dies bedeutet, daß sich die effektive Streubreite E von beispielsweise 24 m durch Unterbrechen der Materialzufuhr zu den äußeren Wurfelementen 12 und 15 auf die geringere effektive Streubreite E' von 16 m reduzieren läßt, ohne daß eine Änderung der Streustärke S stattfindet. Verfährt man in umgekehrter Reihenfolge, läßt sich die effektive Streubreite vergrößern. Durch das Verschließen der jeweiligen Auslauföffnungen 8 in den Behälterspitzen 5 mit Hilfe der Verstellelemente 9 ist das Entstehen der einzelnen Streufächer 28, 29, 30 und 31 während des Ausstreuens von Düngemitteln so zu regeln, daß die effektive Streubreite E, E', bzw. e des Streubildes 26 unter Beibehaltung der großen Gleichmäßigkeit der Streustärke S stufenweise zu verändern ist.

Diese große Gleichmäßigkeit der Streustärke S innerhalb eines jeden Streufächers und somit über die jeweilige effektive Streubreite E, E! und e läßt sich nur durch das Abschleudern der Düngemittelpartikel mit unterschiedlichen Umfangsgeschwindigkeiten durch unterschiedliche, auf den Wurfelementen angeordneten Wurfschaufeln 32, 33, 34 und 35 herbeiführen. Hierbei können die einzelnen Wurfelemente 12, 13, 14 und 15 jeweils mit beispielsweise zwei unterschiedlich langen Wurfschaufeln 32, 33, 34 und 35 bestückt sein. Des weiteren ist es beispielsweise auch möglich, diese unterschiedlich langen Wurfschaufeln 32, 33, 34 und 35 gegen die Wurfschaufeln 36, 37, 38 und 39, die jeweils unterschiedliche Winkel $\alpha$ und $\beta$ zur Radialen der jeweiligen Schleuderscheibe 16 aufweisen, auszutauschen. Diese mit unterschiedlichen Winkeln $\alpha$ und $\beta$ zur Radialen der Schleuderscheiben 16 angestellten Wurfschaufeln 36, 37, 38 und 39 bewirken jeweils ein Abschleudern der Düngemittelpartikel mit unterschiedlichen Umfangsgeschwindigkeiten von den Schleuderscheiben 16, so daß die einzelnen Düngemittelpartikel auch hier unterschiedlich weit von der Schleuderscheibe 16 abgeschleudert werden. Hierdurch wird ebenfalls eine Streustärke S großer Gleichmäßigkeit innerhalb eines jeden Streufächers 28, 29, 30 und 31 und somit über die jeweilige effektive Streubreite E, E' und e erreicht.

Die Fig. 3 stellt das Streubild 27, welches mit den unterschiedlichen Winkeln zur Radialen der Schleuderscheiben 16 angestellten Wurfschaufeln 36, 37, 38 und 39 erzeugt wird, dar. Hierbei handelt es sich ebenfalls um ein Streubild mit sehr großer gleichmäßiger Streustärke S. Die bereits zur Fig. 2 angeführten Erläuterungen treffen auch auf das Streubild gemäß Fig. 3 zu. Die Anordnung der Wurfschaufeln ist hier so getroffen, um unterschiedliche Abwurfgeschwindigkeiten für die Düngemittelpartikel bzgl. der gleichen Schleuderscheiben zu erreichen, daß die Wurfschaufeln mit unterschiedlichen Winkeln zur Radialen angestellt sind. Hierdurch wird der gleiche Effekt wie bei kurzen und langen Wurfschaufeln deren äußere Teile einen unterschiedlichen Abstand zur Drehachse haben, erreicht.

Amazonen-Werke

H. Dreyer GmbH & Co. KG

Am Amazonenwerk 9 - 13

4507 Hasbergen-Gaste

ANR 1 000 667


P a t e n t a n s p r ü c h e

1.

Schleuderstreuer, der einen Rahmen, sowie einen mit einstell- und verschließbaren Dosieröffnungen vorgesehenen Vorratsbehälter aufweist, und bei dem sich die Wurfelemente unterhalb des Vorratsbehälters und innerhalb des vom Vorratsbehälter seitlich begrenzten Bereiches befinden, wobei zumindest drei, vorzugsweise vier Wurfelemente unterhalb des Vorratsbehälter innerhalb des vom Vorratsbehälters seitlich begrenzten Bereiches angeordnet sind, sowie jeweils einem Wurfelement zugeordneten Dosieröffnungen die unabhängig von den den anderen Wurfelementen zugeordneten Dosieröffnungen verschließbar sind und zwar derart, daß während des Betriebes (Ausbringen von Düngemitteln auf dem Feld) die Streubreite durch Zu- bzw. Abschalten von Streufächern in zumindest drei, vorzugsweise vier Stufen vergrößer- bzw. verkleinerbar ist, dadurch gekennzeichnet, daß auf den Wurfelementen (12,13,14,15), die als Schleuderscheiben (16) ausgebildet sind, jeweils zumindest zwei Wurfschaufeln (17) angeordnet sind und zwar derart, daß jede Wurfschaufel (17) der Schleuderscheiben (16) die Düngemittelpartikeln mit einer anderen Umfangsgeschwindigkeit abschleudert.

2.

Schleuderstreuer nach Anspruch 1, dadurch gekennzeichnet, daß die auf der Schleuderscheibe (16) angeordneten Wurfschaufeln (32,33,34,35) unterschiedlich lang sind.

3.
Schleuderstreuer nach Anspruch 1, dadurch gekennzeichnet, daß die äußeren Teile der auf den Schleuderscheiben (16) angeordneten Wurfschaufeln (32,33,34,35) jeweils einen unterschiedlichen Abstand zur Drehachse (21,22,24,25) der Scheuderscheibe (16) aufweisen.

4.
Schleuderstreuer nach Anspruch 1, dadurch gekennzeichnet, daß die Wurfschaufeln (36,37,38,39) mit unterschiedlichen Winkeln ($\alpha$ und $\beta$) zur Radialen der Schleuderscheibe (16) angestellt sind.

5.
Schleuderstreuer nach Anspruch 1, dadurch gekennzeichnet, daß die Wurfschaufeln (17) auf den jeweils einander benachbarten Schleuderscheiben (16) winkelversetzt zueinander angeordnet sind.

FIG.1

FIG. 2

FIG. 3

0237927

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | DE-A-1 457 867 (MINISTERUL) <br> * Seite 9; Seite 10, Abbildungen 1,2,5,6,7,8 * | 1 | A 01 C 17/00 |
| A | | 2,3,4, 5 | |
| | --- | | |
| Y | FR-A-2 553 251 (AMAZONEN) <br> * Seite 7, Zeilen 25-35; Seite 8, Zeilen 1-17; Abbildungen 2,3,4,5 * | 1 | |
| | --- | | |
| A | DE-A-1 757 070 (SIWERSSON) <br> * Seiten 8,9; Abbildungen 4,5,6,7,8,9 * | 1,2 | |
| | --- | | RECHERCHIERTE SACHGEBIETE (Int Cl 4) |
| A | FR-A-2 496 390 (AMAZONEN) <br> * Seite 5, Abbildungen 1,2,3 * | 4 | A 01 C |
| | --- | | |
| A | FR-A-2 546 709 (BUARD) | | |
| | --- | | |
| A | FR-A-2 450 551 (AMAZONEN) | | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 23-06-1987 | VERMANDER R.H. |